# FASCICULE DE BREVET EUROPEEN

(11) **EP 1 851 072 B1**
(45) Date de publication et mention de la délivrance du brevet: **28.08.2013**
(21) Numéro de dépôt: 05772949.3
(22) Date de dépôt: 20.05.2005
(51) Int. Cl.: B60B 1/04, B60B 21/06

(54) **DISPOSITIF DE MONTAGE D'UN RAYON SUR UNE JANTE OU MOYEU DE ROUE**
VORRICHTUNG ZUR MONTAGE EINER SPEICHE AN EINER RADFELGE ODER NABE
DEVICE FOR MOUNTING A SPOKE ON A WHEEL RIM OR HUB

(30) Priorité: 23.02.2005 FR 0501836
(43) Date de publication de la demande: 07.11.2007
(73) Titulaire: Lacombe, Jean-Pierre, 74150 Marcellaz Albanais (FR)
(72) Inventeur: Lacombe, Jean-Pierre, 74150 Marcellaz Albanais (FR)
(74) Mandataire: Gasquet, Denis
(86) Numéro de dépôt international: PCT/FR2005/001272
(87) Numéro de publication internationale: WO 2006/090020

(56) Documents cités:
- EP-A- 0 123 519
- EP-A- 0 838 352
- WO-A-2004/065138
- FR-A- 2 801 247

## Description

La présente invention concerne un rayon pour un jante ou moyeu de roue.

Elle s'applique plus particulièrement aux roues de bicyclette.

Le montage d'un rayon sur une jante de roue est généralement réalisé à l'aide d'un écrou traversant la jante de la roue et vissé autour du rayon. Ce montage crée une tension dans le rayon, et on obtient une roue montée de qualité lorsque la tension est uniforme dans tous les rayons montés sur la jante. La liaison rayon/ écrou peut aussi être réalisée au niveau du moyeu de roue.

Or, il est connu qu'en utilisation, la roue ainsi montée subit des chocs et efforts latéraux, ce qui provoque la détente des rayons concernés et le desserrage des écrous et a pour conséquence l'apparition d'effets dits de « voile » et de « saut » sur la roue concernée. Ces effets de desserrage apparaissent plus particulièrement sur les roues arrières de bicyclette qui présentent des rayons peu tendus du côté opposé à la roue libre. Ces effets de desserrage apparaissent donc plus fréquemment du côté opposé à celui où sont montés les pignons.

Pour résoudre ces problèmes de détente des rayons et de desserrage des écrous par rapport aux rayons, différentes solutions ont déjà été proposées.

Il y a tout d'abord, les solutions de type artisanal propres à chaque monteur de roues qui utilise, selon leur expérience et les moyens disponibles, de la glue, différentes résines, du suif...

Certains ont tenté de développer des solutions industrielles directement lors de la fabrication de la roue.

Ainsi, il est connu de coller l'écrou sur le rayon avec de la colle anaérobie telle que celle commercialisée sous la marque « LOCTTTE ». Cette solution est d'un coût élevé et peu fiable car la polymérisation de la colle est aléatoire et un éventuel réglage de tension ultérieur cisaille la colle et le risque de desserrage réapparaît.

Le brevet EP0838352 divulgue un écrou dont la tête loge une bague en matière plastique qui freine l'extrémité filetée du rayon vissée dans l'écrou. Cette solution est fiable mais d'un coût élevé car délicate à réaliser.

Le brevet US6557946 divulgue un écrou pour rayon dans lequel est logée une colle encapsulée dans la partie opposée à la tête et qui freine également l'extrémité filetée du rayon vissée dans l'écrou. Cette solution est également d'un coût très élevé, ce qui la laisse applicable qu'à des roues de haut de gamme. De plus comme la solution de collage vue ci-dessus, elle ne permet pas de multiples revissages de part le cisaillement de la colle.

Enfin, le brevet FR2801247 divulgue un écrou déformé localement par un poinçon, ce qui écrase localement à la fois le filet de l'écrou et celui de la tige de rayon. Cette solution n'est pas fiable car la déformation locale est trop faible pour obtenir un freinage satisfaisant dans l'intervalle de tolérances des filetages vis/écrou.

Le but de l'invention est alors de proposer une autre solution particulièrement simple, fiable et peu chère.

A cet effet, l'invention a pour objet un rayon comme revendiqué par la revendication 1.

La problématique générale du freinage d'un écrou de rayon par rapport au rayon est notamment liée au fait que le filetage est de très petite dimension et que la tolérance normalisée entre la vis et l'écrou est relativement étendue par rapport à la dimension nominale du filetage. Ainsi pour un diamètre de filetage de 2,25 mm et un pas de l'ordre de 0,45 mm, l'étendue du jeu est d'environ 0,15 mm, et par conséquent, pour obtenir un couple de freinage relativement constant dans tous ces cas de tolérances, il est nécessaire d'avoir un élément déformable qui compense les variations de jeu de cet ajustement vis/ écrou.

L'idée du brevet est de se servir du rayon comme élément déformable en le faisant travailler en flexion à l'intérieur même de l'écrou. Ainsi, on ne rajoute pas d'élément supplémentaire. La flexion du rayon génère des efforts de contact radiaux entre la vis et l'écrou et induisent une composante tangente par frottement générant ainsi un couple de freinage dès lors qu'on cherche à les déplacer en rotation.

D'autres caractéristiques et avantages de l'invention se dégageront de la description qui va suivre en regard des dessins annexés qui ne sont donnés qu'à titre d'exemples non limitatifs.

La figure 1 est une vue en perspective éclatée d'un rayon et son écrou associé, selon le mode de réalisation préféré de l'invention et avant montage.

La figure 2 est une vue en coupe longitudinale d'un dispositif de montage avec l'écrou et le rayon selon la figure 1;

La figure 2a est également une vue en coupe longitudinale d'un dispositif de montage selon le mode de réalisation des figures 1 et 2 mais avec une variante du rayon;

La figure 3 est une vue en coupe longitudinale d'un autre mode de réalisation du dispositif de montage selon l'invention ;

La figure 4 est une vue en coupe longitudinale d'un autre mode de réalisation du dispositif de montage selon l'invention ;

La figure 5 est une vue schématique en coupe longitudinale d'un outillage de fabrication du rayon selon l'invention.

Le montage du rayon (1) dans l'écrou (2) selon l'invention est illustré dans les différentes figures avec un jeu entre l'écrou et le rayon volontairement accentué pour faciliter la compréhension de l'invention.

Selon les modes de réalisation illustrés, le rayon selon l'invention pour une jante de roue est du type comprenant un rayon (1) constitué d'une tige (10) qui s'étend selon un axe (X-X') et dont une extrémité (11) est munie d'un filetage externe (110) vissé à l'intérieur de celui interne (200) d'un écrou (2), monté dans une ouverture pratiquée à l'intérieur de la jante.

Selon l'invention, au moins une partie (11a,11b,11c,11d,11e,11f) de l'extrémité filetée (11) du rayon (1), vissée dans l'écrou (2), est incurvée par rapport à l'axe (X-X'), afin d'augmenter le couple de freinage par frottement direct de l'écrou (2) par rapport à la tige (10).

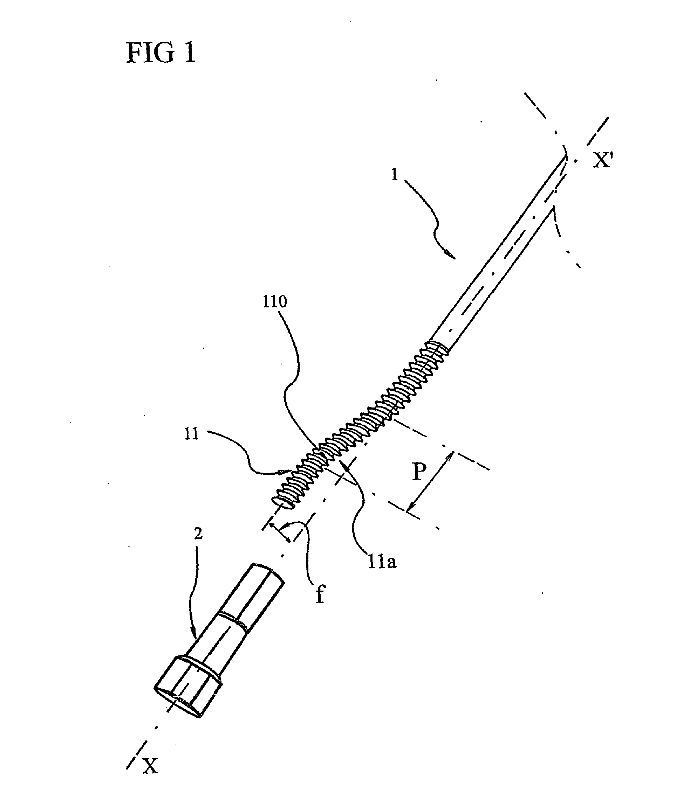

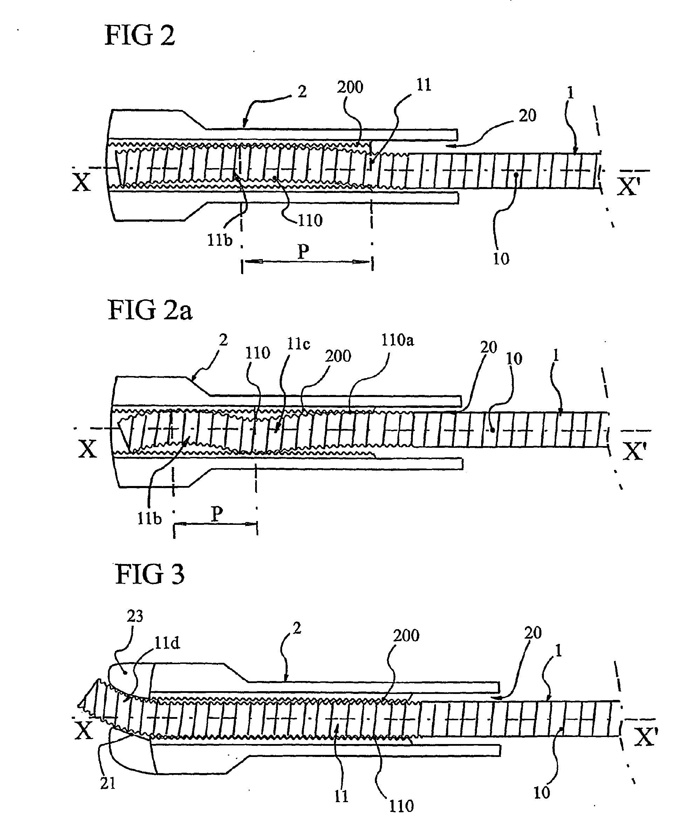

Selon le mode de réalisation préféré des figures 1 et 2, la partie incurvée présente une unique courbure (11a) par rapport à l'axe (X-X'). Selon ce mode de réalisation, l'écrou (2) est connu en soi tandis que le rayon (1) a été fabriqué selon un procédé de fabrication, dans lequel on réalise une étape de filetage (110) d'une extrémité (11) de la tige (10) constituant le rayon (1) et dans lequel on cintre au moins une partie (11a) de l'extrémité filetée (110).

Selon la variante de réalisation de la figure 2a, l'écrou (2) est également connu en soi et le rayon (1) a été réalisé selon le même procédé de fabrication mais avec cintrage de deux parties (11b,11c), et donc, la partie incurvée présente au moins deux courbures d'incurvation (11b,11c) opposées par rapport à l'axe (X-X'), telles qu'une courbure concave (11b) et une courbure convexe (11c).

Selon les variantes de réalisation des figures 1 à 2a, l'incurvation de l'extrémité filetée (11) du rayon (1) est telle que la tige (10) est coaxiale avec le logement (21) de l'écrou (2), monté dans une jante de roue (non représentée), dans laquelle elle est vissée.

Comme mentionné précédemment, le jeu entre le rayon (1) et l'écrou (2), tel que représenté aux figures 2 à 4, a été volontairement accentué. Ainsi, sur la figure 2a, seule la partie haute des premiers filets (110a) du rayon (1) est montrée en prise avec l'écrou (2). En réalité, ces premiers filets (110a) sont en prise sur toute la périphérie, de préférence sur une longueur d'environ 0,4mm après montage.

Selon les modes de réalisation illustrés aux figures 1,2,2a et 4, la partie incurvée (11a,11b,11c,11e,11f) de l'extrémité filetée (11) du rayon (1) est incurvée à l'intérieur de l'écrou.

Selon le mode de réalisation illustré de la figure 3, la partie incurvée (11d) de l'extrémité filetée (11) du rayon (1) est incurvée à l'extérieur de l'écrou (2) du côté de la jante (non représentée).

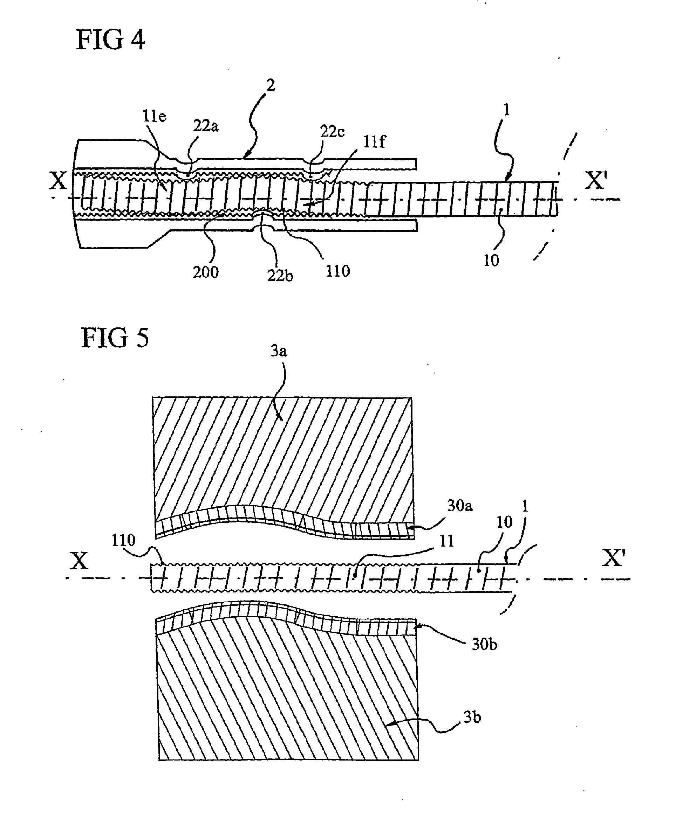

Selon les modes de réalisation illustrés aux figures 3 et 4, l'écrou (2), du type comprenant un logement (20) à la périphérie duquel est ménagé un filetage interne (taraudage) (200), comprend, selon l'invention, des moyens (21,22a,22b,22c) disposés à l'intérieur du logement (20), et destinés à incurver au moins une partie (11d,11e,11f) d'une extrémité filetée (11) d'une tige (10) vissée dans le logement (20).

Selon le mode de réalisation illustré à la figure 3, les moyens sont constitués par au moins une rampe (21), disposée dans la tête (23) d'écrou (2) et destinée à modifier localement le profil du logement afin d'incurver la partie de l'extrémité filetée de la tige vissée, à l'extérieur du logement.

Selon le mode de réalisation illustré à la figure 4, les moyens sont constitués par au moins un bossage (22a,22b,22c), disposé sur une partie intermédiaire du filetage interne (200) en étant orienté vers l'intérieur du logement et destiné à incurver en flexion la partie de l'extrémité filetée de la tige vissée, à l'intérieur du logement. De préférence, les moyens sont constitués par au moins deux bossages (22a,22b) diamétralement opposés et écartés l'un (22a) de l'autre (22b) dans le logement (20). Ainsi, dans ce mode de réalisation, le rayon peut-être tout à fait standard et rectiligne avant son introduction dans l'écrou et ce sont les bossages de l'écrou qui le déforment en flexion lors de son vissage, générant ainsi le couple de freinage voulu.

Selon le mode de fabrication préféré du rayon (1) selon l'invention, le rayon (1) est incurvé par introduction dans l'espace délimité par les deux matrices (3a,3b) de forme écartées l'une de l'autre (figure 5). Ces deux matrices (3a,3b) présentent chacune une surface interne (30a) complémentaire à l'autre (30b) et présentant un profil incurvé (11a) à donner au rayon. Une fois introduit entre les deux matrices (3a,3b) et selon le procédé préféré de l'invention, les deux matrices (3a,3b) sont rapprochées l'une de l'autre et donc refermées sur le rayon (1) qui prend alors la forme incurvée voulue et reprend une forme stable par retour élastique lors de l'écartement à nouveau des matrices (3a,3b) l'une de l'autre. Avantageusement, les matrices (3a,3b) selon l'invention feront partie intégrante d'une machine supplémentaire implantée en bout de lignes de fabrication de rayons existants, telles que les lignes en continu avec machines de fabrication à postes multiples destinées à transformer un rouleau de fil en un rayon pour jante de vélo.

L'invention qui vient d'être décrite permet un montage simple, fiable et peu coûteux d'un écrou sur un rayon de roue de vélo. Ainsi, le couple de freinage selon l'invention est parfaitement maîtrisé et stable quelles que soient les tolérances d'ajustement entre le rayon et l'écrou.

On a obtenu de très bons résultats de freinage en réalisant un rayon de filetage de diamètre 2,25mm suivant les figures 1 et 2 présentant une flèche (f) comprise entre 0,1 et 0,5 mm, de préférence de 0,3 mm avant montage sur une portée (P) entre appuis comprise entre 7 et 8 mm, de préférence de 9mm avant montage, le rayon, une fois vissé, reprenant la forme de l'écrou en rattrapant néanmoins le jeu du filetage.

Il peut-être avantageux d'exagérer la flèche du rayon, car, dans ce cas, lors du premier vissage, le rayon se trouvera calibré par l'écrou qui limitera par plastification sa flèche: ainsi si l'on dévisse un rayon qui aura été préalablement vissé complètement, on constatera que sa flèche aura diminuée. En d'autres termes, il se sera détordu en s'adaptant au maximum de ses capacités de déformation en flexion par rapport à l'écrou et leur jeu relatif, calibrant ainsi plus précisément par plastification le couple de freinage. L'utilisation de vagues multiples, comme montré à la figure 2a, permet d'augmenter le couple maxi de freinage, la flexion du rayon étant cependant plus rigide et le couple se trouvant ainsi augmenté mais moins stable par rapport aux dispersions de tolérances entre le filetage du rayon et le taraudage de l'écrou.

De manière générale, il est préférable que les premiers filets en prise entre l'écrou et le rayon soient parfaitement rectilignes ou non déformés, car ceux sont ces premiers filets qui sont les plus sollicités : il est donc préférable de commencer la flexion du rayon juste après cette zone pour ne pas risquer d'affaiblir la résistance des premiers filets du rayon (voir figure 2a).

L'invention peut parfaitement s'appliquer aux roues déjà existantes desquelles les rayons peuvent être démontés et cintrés localement au niveau de la partie filetée de la tige, par exemple à l'aide d'une appareil de cintrage prévu à cet effet, avant d'être à nouveau revissés individuellement dans leur écrou associé.

Bien entendu, l'invention n'est pas limitée aux modes de réalisation décrits et représentés à titre d'exemples.

Par exemple, il est possible de prévoir un rayon cintré avant son vissage dans l'écrou, et de prévoir un écrou avec des moyens supplémentaires de cintrage de la même partie ou d'une autre partie de la tige filetée, à l'intérieur du logement de l'écrou.

## Revendications

1. Rayon (1) pour une jante ou moyeu de roue, du type constitué d'une tige (10) qui s'étend selon un axe (X-X') et dont une extrémité (11) est munie d'un filetage externe (110) à visser à l'intérieur de celui interne (200) d'un écrou (2), monté dans une ouverture pratiquée à l'intérieur de la jante ou du moyeu, **caractérisé en ce qu'**au moins une partie (11a,11b,11c,11d,11e,11f) de l'extrémité filetée (11) du rayon (1), à visser dans l'écrou (2), est incurvée par rapport à l'axe (X-X'), afin d'augmenter le couple de freinage par frottement direct de l'écrou (2) par rapport à la tige (10).

2. Rayon (1) selon la revendication 1, **caractérisé en ce que** la partie incurvée présente une unique courbure (11a).

3. Rayon (1) selon la revendication 1, **caractérisé en ce que** la partie incurvée présente au moins deux courbures d'incurvation (11b,11c) opposées par rapport à l'axe (X-X'), telles qu'une courbure concave (11b) et une courbure convexe (11c).

4. Rayon (1) selon l'une quelconque des revendications précédentes, **caractérisé en ce que** la partie incurvée (11a,11b,11c,11e,11f) de l'extrémité filetée (11) du rayon est incurvée à l'intérieur de l'écrou.

5. Rayon (1) selon l'une quelconque des revendications 1 à 3, **caractérisé en ce que** la partie incurvée (11d) de l'extrémité filetée (11) du rayon est incurvée à l'extérieur de J'écrou (2) du côté de la jante.

6. Rayon (1) selon l'une quelconque des revendications précédentes, **caractérisé en ce que** l'incurvation de l'extrémité filetée est telle que la tige est coaxiale avec le logement d'un écrou dans lequel elle est vissée, l'écrou étant monté dans une jante de roue.

7. Procédé de fabrication d'un rayon (1) pour jante de roue, dans lequel on réalise une étape de filetage d'une extrémité (11) de la tige (10) constituant le rayon (1), **caractérisé en ce qu'**on cintre au moins une partie (11a,11b,11c) de l'extrémité filetée.

8. Procédé selon la revendication 7, **caractérisé en ce qu'**on réalise le cintrage de la partie de l'extrémité filetée à l'aide de deux matrices (3a,3b) aux surfaces internes complémentaires (30a,30b) et au profil incurvé, destinées à se rapprocher l'une de l'autre.

9. Procédé selon la revendication 8, **caractérisé en ce que** les deux matrices (3a,3b) font partie intégrante d'une machine implantée en bout de ligne de fabrication en continu de rayons à partir d'un rouleau de fil.

## Patentansprüche

1. Speiche (1) für eine Radnabe oder Radfelge, der Art, die aus einer Stange (10) besteht, die sich entlang einer Achse (X-X') erstreckt und deren eines Ende (11) mit einem Außengewinde (110) versehen ist, um es in ein Innengewinde (200) einer Schraubenmutter (2) einschrauben zu können, die in einer auf der Innenseite der Felge oder der Nabe ausgebildeten Öffnung montiert ist, **dadurch gekennzeichnet, dass** wenigstens ein Teil (11 a, 11 b, 11 c, 11 d, 11 e, 11f) des mit dem Gewinde versehenen und in die Schraubenmutter (2) einschraubbaren Endes (11) der Speiche (1) relativ zu der Achse (X-X') gebogen ist, um das Bremsmoment durch direkte Reibung zwischen der Schraubenmutter (2) und der Stange (10) zu erhöhen.

2. Speiche (1) nach Anspruch 1, **dadurch gekennzeichnet, dass** der gebogene Teil eine einzige Krümmung (11a) aufweist.

3. Speiche (1) nach Anspruch 1, **dadurch gekennzeichnet, dass** der gebogene Teil mindestens zwei Krümmungen (11b, 11 c) mit relativ zu der Achse (X-X') entgegengesetzten Biegungen aufweist, wie zum Beispiel eine konkave Krümmung (11 b) und eine konvexe Krümmung (11 c).

4. Speiche (1) nach irgendeinem der vorhergehenden Ansprüche, **dadurch gekennzeichnet, dass** der gebogene Teil (11a, 11b, 11c, 11e, 11f) des mit dem Gewinde versehenen Endes (11) der Speiche im Inneren der Schraubenmutter gebogen ist.

5. Speiche (1) nach irgendeinem der Ansprüche 1 bis 3, **dadurch gekennzeichnet, dass** der gebogene Teil (11d) des mit dem Gewinde versehenen Endes (11) der Speiche außerhalb der Schraubenmutter (2) an der Seite der Felge gebogen ist.

6. Speiche (1) nach irgendeinem der vorhergehenden Ansprüche, **dadurch gekennzeichnet, dass** die Krümmung des mit dem Gewinde versehenen Endes derart ausgebildet ist, dass die Stange koaxial zu der Aufnahme der Schraubenmutter ist, in die sie eingeschraubt ist, wobei die Schraubenmutter in einer Radfelge montiert ist.

7. Verfahren zur Herstellung einer Speiche (1) für eine Radfelge, bei dem ein Schritt des Gewindeschneidens an einem Ende (11) der Stange (10), aus dem die Speiche (1) besteht, durchgeführt wird, **dadurch gekennzeichnet, dass** mindestens ein Teil (11a, 11 b, 11 c) des mit einem Gewinde versehenen Endes gebogen wird.

8. Verfahren nach Anspruch 7, **dadurch gekennzeichnet, dass** das Biegen des Teils des mit dem Gewinde versehenen Endes mit Hilfe von zwei Formwerkzeugen (3a, 3b) mit komplementären Innenflächen (30a, 30b) und einem gebogenen Profil, die ausgebildet sind, sich einander zu nähern, durchgeführt wird.

9. Verfahren nach Anspruch 8, **dadurch gekennzeichnet, dass** die beiden Formwerkzeuge (3a, 3b) integrierter Bestandteil einer Maschine sind, die am Ende einer kontinuierlichen Fertigungsstraße, mit der Speichen ausgehend von einer Drahtrolle hergestellt werden, angeordnet ist.

## Claims

1. Spoke (1) for a wheel rim or wheel hub, said spoke being of the type made up of a shank (10) which extends along an axis (X-X') and of which one end (11) is equipped with an external thread (110) which is to be screwed inside the internal thread (200) of a nipple (2) which is mounted in an opening made inside the rim or hub, **characterised in that** at least a part (11a, 11b, 11c, 11d, 11e, 11f) of that threaded end (11) of the spoke (1) which is to be screwed into the nipple (2) is incurved in relation to the axis (X-X') in order to increase the jamming torque by direct friction of the nipple (2) in relation to the shank (10).

2. Spoke (1) according to Claim 1, **characterised in that** the incurved part has a single curve (11a).

3. Spoke (1) according to Claim 1, **characterised in that** the curved part has a least two incurvation curves (11b, 11c) which are opposed in relation to the axis (X-X'), such as a concave curve (11b) and a convex curve (11c).

4. Spoke (1) according to any of the preceding claims, **characterised in that** the incurved part (11a, 11b, 11c, 11d, 11e, 11f) of the threaded end (11) of the spoke is incurved inside the nipple.

5. Spoke (1) according to any of the preceding Claims 1 to 3, **characterised in that** the incurved part (11d) of the threaded end (11) of the spoke is incurved outside the nipple (2) at the rim end.

6. Spoke (1) according to any of the preceding claims, **characterised in that** the incurvation of the threaded end is such that the shank is coaxial with the seating of a nipple into which it is screwed, said nipple being mounted in a wheel rim.

7. Process for manufacturing a spoke (1) for a wheel rim, in which a stage for threading an end (11) of the shank (10) that constitutes the spoke (1) is carried out, **characterised in that** at least a part (11a, 11b, 11c) of the threaded end is bent.

8. Process according to Claim 7, **characterised in that** the bending of the part of the threaded end is carried out with the aid of two dies (3a, 3b) which have complementary internal surfaces (30a, 30b) and an incurved profile and which are intended to approach one another.

9. Process according to Claim 8, **characterised in that** the two dies (3a, 3b) form an integral part of a machine set up at the end of a line for the continuous manufacture of spokes from a roll of wire.
